# EUROPEAN PATENT SPECIFICATION

(11) **EP 0 276 017 B1**
(45) Date of publication and mention of the grant of the patent: **01.06.1994**
(21) Application number: 88100954.2
(22) Date of filing: 22.01.1988
(51) Int. Cl.: G06F 15/72, G06F 15/40

(54) **Stored data high speed processing apparatus**
Einrichtung zur Hochgeschwindigkeitsverarbeitung gespeicherter Daten
Dispositif de traitement à grande vitesse de données archivées

(30) Priority: 22.01.1987 JP 11438/87
(43) Date of publication of application: 27.07.1988
(73) Proprietor: KABUSHIKI KAISHA TOSHIBA, Kawasaki-shi, Kanagawa-ken 210 (JP)
(72) Inventor: Kanno, Masayuki c/o Patent Division, Minato-ku Tokyo 105 (JP)
(74) Representative: Henkel, Feiler, Hänzel & Partner

(56) References cited:
- PATENT ABSTRACTS OF JAPAN vol. 9, no. 181 (E-331)26 July 1985 & JP-A-60 051 059 ( ARIMOTO SHINOBU ) 22 March 1985
- 1985 IEEE COMPUTER SOCIETY WORKSHOP ON COMPUTER ARCHITECTURE FOR PATTERN ANALYSIS AND IMAGE DATABASE MANAGEMENT 18 November 1985, MIAMI BEACH, US pages 340 - 347; M. NAGATA ET AL.: 'Video image manipulation in multi-media pictorial database management'
- COMMUNICATIONS OF THE ASSOCIATION FOR COMPUTING MACHINERY. vol. 29, no. 1, January 1986, NEW YORK US pages 30 - 37; M. HECK ET AL.: 'A workstation model for an interactive graphics system'
- PATENT ABSTRACTS OF JAPAN vol. 11, no. 49 (P-547)14 February 1987 & JP-A-61 216 090 ( MOCHIZUKI HIROSHI ) 25 September 1986

## Description

The present invention relates to a stored data high speed processing apparatus and, more particularly, to a data retrieval apparatus for retrieving and outputting stored data such as image data or document data stored in a storage medium.

Recently, an electronic filing apparatus has been developed and put into practical use as a data retrieval apparatus, which reads character or image data included in a large amount of documents produced in various industrial fields by utilizing an optical two-dimensional scanning system, stores the read character or image data in a magnetic or optical semipermanent storage medium, retrieves and reads out desired data from the various data stored in the storage medium as needed, and outputs the readout data as visual data using display means such as a CRT display unit or recording means such as printer.

In an electronic filing apparatus of this type, character or image data as stored data is stored in a storage medium such as optical or magnetic disk as coded data. Stored data retrieved from the storage medium is temporarily stored in a buffer memory, and then decoded by a decoder. Thereafter, the decoded data is stored in a page memory serving as a temporary storage means. When the decoded data temporarily stored in the page memory is to be displayed on a display means, the data is enlarged or reduced by an enlargement/reduction circuit and converted into the data having the number of bits corresponding to the display size of the display means. The converted data is stored in a display memory and displayed on the display means. When stored data having the same contents as those of the stored data displayed on the display means is to be recorded and output by a recording means, the stored data is read out from the page memory serving as the temporary storage means, and then recorded and output by the recording means as a hard copy.

According to such a conventional electronic filing apparatus, when stored data read out from a storage medium such as an optical disk is to be retrieved and displayed, linearly sequential processing is performed in the following order: optical disk → buffer memory (or cache memory) → coder/decoder → page memory → enlargement/reduction circuit → display memory → display. For this reason, the time interval between the start of retrieval of stored data and actual image formation on a display is prolonged. A user inevitably feels that a long period of time is wasted.

According to the conventional electronic filing apparatus (data retrieval apparatus), when data stored in a storage medium is to be retrieved, displayed, and recorded, linearly sequential processing is performed in the following order: storage medium → buffer memory → coder/decoder → page memory → enlargement/reduction circuit → display memory → display means (display) → image memory → recording means (hard copy: recording). For this reason, a considerably long period of time is required for causing the display means to display data retrieved from the storage medium and for causing the recording means to record and output the retrieved data as a hard copy. Therefore, an operator is forced to waste a long period of time, and processing efficiency is degraded.

A conventional picture processing system is known from JP-A-60 051 059.

Similarly, when communication processing is to be performed so as to supply retrieved and readout data to an external unit such as a facsimile unit or a personal computer or a host computer etc. through a communication line, a long period of time is required.

It is, therefore, an object of the present invention to provide a new and improved high speed processing apparatus for stored data in which unlike in the conventional apparatus, stored data retrieved and read out from a storage medium is not linearly processed, but parallelly processed in terms of time, thereby realizing high speed processing of the stored data.

The invention is set out in claim 1.

These and other objects and features of the present invention can be understood through the following embodiments by reference to the accompanying drawings, in which:
Fig. 1 is a schematic view showing an arrangement of a data retrieval apparatus according to the present invention;
Fig. 2 is a view showing an arrangement of a main part of an apparatus for executing parallel processing in the data retrieval apparatus in Fig. 1 according to an embodiment of the present invention;
Fig. 3 is a view of a data flow for explaining the parallel processing of the apparatus in Fig. 2;
Fig. 4 is a schematic circuit diagram showing parallel processing circuit in Fig. 1 in detail;
Figs. 5A to 5K are timing charts of signals in the circuit in Fig. 4;
Fig. 6 is a view showing an arrangement of a main part of the apparatus for executing parallel processing according to another embodiment of the present invention; and
Figs. 7A to 7D are views of data flows for explaining various parallel operations according to the present invention.

Preferred embodiments of the present invention will be described with reference to the accompanying drawings.

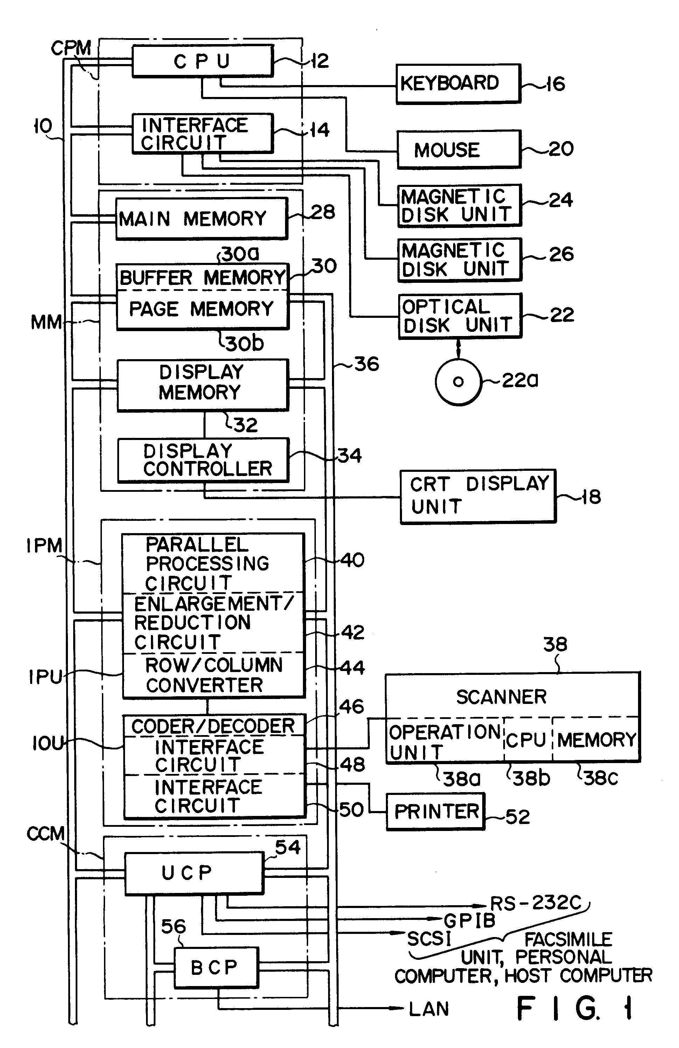

Fig. 1 shows a schematic arrangement of data retrieval apparatus to which the present invention is applied.

This data retrieval apparatus comprises central processing module CPM, memory module MM, image processing module IPM, and communication control module CCM. These modules are connected to each other through system bus 10.

Central processing module CPM is constituted by central processing unit (CPU) 12 and interface circuit 14. CPU 12 is connected to system bus 10 to control the apparatus as a whole. CPU 12 can perform multi-task operations. Keyboard 16 and pointing device 20 called a mouse are connected to CPU 12. Keyboard 16 is used for entering various data such as command data. Mouse 20 serves to move a cursor, which is displayed on CRT display unit 18 serving as a display means described later, to select various processing icons. System bus 10, optical disk unit 22, and magnetic disk units 24 and 26 are connected to interface circuit 14. Optical disk unit 22 stores character or image data as stored data read from a document or the like, into an optical disk 22a. Magnetic disk units 24 and 26 store retrieval data for retrieving data stored in optical disk 22a. Magnetic disk unit 24 is constituted by, e.g., a floppy disk unit, whereas magnetic disk unit 26 is constituted by, e.g., a hard disk unit. Interface circuit 14 interfaces disk units 22, 24, and 26 to memory module MM and the like.

Memory module MM comprises main memory 28, memory 30, display memory 32, and display controller 34. Main memory 28 is connected to system bus 10. Main memory 28 stores the operating system or the like for CPU 12. Memory 30 is connected to system bus 10 and image bus 36. One part of memory 30 functions as buffer memory area 30a, and the other part thereof functions as page memory area 30b as a temporary storage means. Memory 30 temporarily stores image data supplied through scanner 38 and image processing module IPM, both of which will be described later, or stored data read out from optical disk unit 22. Display memory 32 is connected to system bus 10 and image bus 36. Display memory 32 serves to temporarily store the data which is supplied through image bus 36 so as to display the data on CRT display unit 18. Display memory 32 is connected to CRT display unit 18 through display controller 34. Data stored in display memory 32 is displayed on CRT display unit 18.

Image processing module IPM comprises image processing unit IPU including parallel processing circuit 40, enlargement/reduction circuit 42, and row/column converter 44, and input/output unit IOU including coder/decoder 46, and interface circuits 48 and 50. Image processing unit IPU is connected to system and image buses 10 and 36. Image processing unit IPU is connected to memory 30, display memory 32, and the like through image bus 36, so that the data is input/output to memories 30 and 32.

Input/output unit IOU is connected to scanner 38 and printer 52. As described later, scanner 38 reads and inputs image data of a document or the like, and printer 52 records and outputs retrieved data. Scanner 38 is a two-dimensional scanning unit for exposing and scanning image data on an original to obtain an electrical signal corresponding to the image data. Scanner 38 includes operation unit 38a for setting parameters such as an original size to be read, an original density, and a read density, CPU 38b for controlling scanner 38, and memory 38c for storing various parameters set by operation unit 38a. Printer 52 prints out image data read by scanner 38, the data retrieved from optical disk unit 22, or the like. Scanner 38 and printer 52 are connected to coder/decoder 46 through interface circuits 48 and 50.

Communication control module CCM comprises universal communication processor (UCP) 54 and bus communication processor (BCP) 56. UCP 54 is connected to system and image buses 10 and 36. UCP 54 is connected to an external unit such as a facsimile unit or a personal computer or a host computer etc. through an interface for generally using such as RS-232C, GPIB, SCSI etc. and a wordprocessor with a scanner. BCP 56 is connected to UCP 54 and image bus 36, and used as an interface for a LAN (local area network).

An operation for retrieving data from an optical disk by the data retrieval apparatus with the above arrangement will be described below. Retrieval and read commands for the data stored in the optical disk are input at keyboard 16. Optical disk unit 22 retrieves desired stored data corresponding to the retrieval command input at keyboard 16. The retrieved data is written in buffer memory area 30a of memory 30 serving as a temporary storage means through interface circuit 14 and system bus 10.

The above operations are the retrieval operations. After these operations, predetermined series of operations are parallelly processed on the basis of displaying or printing of stored data which is selectively designated at keyboard 16.

In order to perform the parallel processing, the data stored in buffer memory area 30a is read out by input/output unit IOU through image bus 36 and image processing unit IPU. The predetermined series of operations will be schematically described below. The stored data (coded data) read by input/output unit IOU is decoded into image data by coder/decoder 46. The data decoded by coder/decoder 46 is output to image bus 36 through image processing unit IPU, and written in page memory area 30b of memory 30. At the same time, the data decoded by coder/decoder 46 is enlarged or reduced by enlargement/reduction circuit 42 so as to correspond to the display size of CRT display unit 18. When enlargement/reduction circuit 42 processes stored data having, e.g., 16-bit image data, enlargement/reduction circuit 42 writes the image data in display memory 32 while reducing the image data to 8-bit data. If the image data to be input has the number of bits smaller than that suitable for the display size, enlargement/reduction circuit 42 enlarges the image data to be input. The data written in display memory 32 is displayed line by line on CRT display unit 18 in accordance with the write sequence. In addition, according to the data retrieval apparatus, the stored data retrieved and read out by opticai disk unit 22 is decoded by coder/decoder 46, then temporarily stored in page and display memories 30b and 32 and simultaneously displayed on CRT display unit 18. Moreover, the stored data can be printed out by printer 52 simultaneously with the display operation.

According to the series of operations described above the write operation of stored data in page and display memories 30b and 32, and the display operation on CRT display unit 18 can be simultaneously performed, and moreover, the display operation and print-out operation of printer 52 can be simultaneously performed. When an operator designates a retrieval/display operation, stored data is read out from the optical disk. Subsequently, the temporary storage operation of the stored data in page and display memories 30b and 32, and the display operation of the stored data on CRT display unit 18 are simultaneously started. When retrieval/display and print-out operations are designated, printer 52 starts the print-out operation simultaneously with the display operation. Therefore, according to the parallel processing described above, since the operator need not wait for the end of display and print-out operations after the operator designates retrieval of stored data and inputs desired retrieval data, the processing time can be shortened.

The parallel processing will be described in detail below.

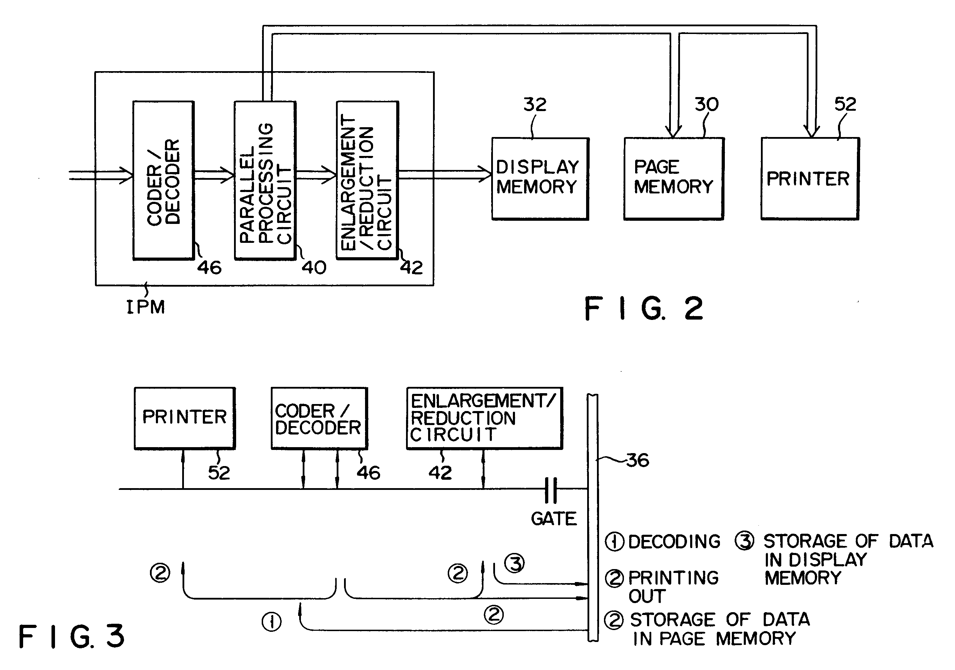

Fig. 2 shows parallel processing functions wherein in order to perform retrieval/display and print-out operations, stored data retrieved by optical disk unit 22 is supplied to image processing unit IPU comprising coder/decoder 46, parallel processing circuit 40, and enlargement/reduction circuit 42 through system bus 10, buffer memory 30a, and image bus 36, all of which are shown in Fig. 1. Fig. 3 shows a flow of the parallel operation in Fig. 2. Stored data (coded data) retrieved by optical disk unit 22 is decoded by coder/decoder 46 into image data (①). The decoded data is transferred by parallel processing circuit 40 (to be described later) to page memory 30b and stored therein (②) while being transferred to display memory 32 and stored therein through enlargement/reduction circuit 42 (③). Furthermore, the stored data is directly transferred to printer 52 (②). The data stored in display memory 32 is sequentially displayed line by line on CRT display unit 18 in Fig. 1. The data transferred to printer 52 is printed out by printer 52 as a hard copy. Accordingly, the storage operation of data in page memory 30b, the display operation on CRT display unit 18, and the recording/output operation at printer 52 are parallelly performed.

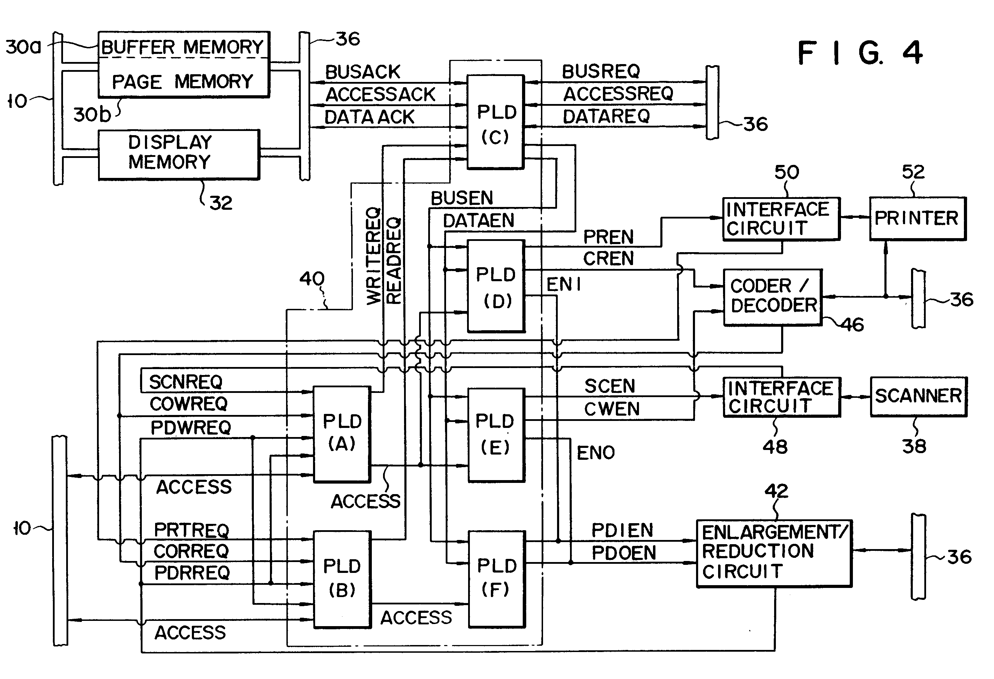

Fig. 4 shows a main part of the apparatus in Fig. 1 with respect to the parallel processing. Referring to Fig. 4, reference numeral 40 denotes a parallel processing circuit including first to sixth programmable logic devices PLD (A) to PLD (F), for performing a kind of bus control so as to perform the parallel processing described above. PLD (A) to PLD (F) are programmable custom logic ICs (e.g., the GAL-16V8 available from LATIS).

In parallel processing circuit 40 shown in Fig. 4, first, initial conditions are externally set as follows. Signal COWREQ (a write request signal from coder/decoder 46) to be supplied to first programmable logic device PLD (A), signal PDRREQ (a read request signal from enlargement/reduction circuit 42) to be supplied to second programmable logic device PLD (B), signal CORREQ (a read request signal from coder/decoder 46), and signal PRTPRQ (a read request signal from printer 52) are enabled in a predetermined order. In addition a command signal for accessing display memory 32 is set in the output register in enlargement/reduction circuit 42. A command signal for accessing enlargement/reduction circuit 42 and printer 52 is set in the output register in coder/decoder 46. A mode for accessing buffer memory 30a is set in the output register in optical disk unit 17.

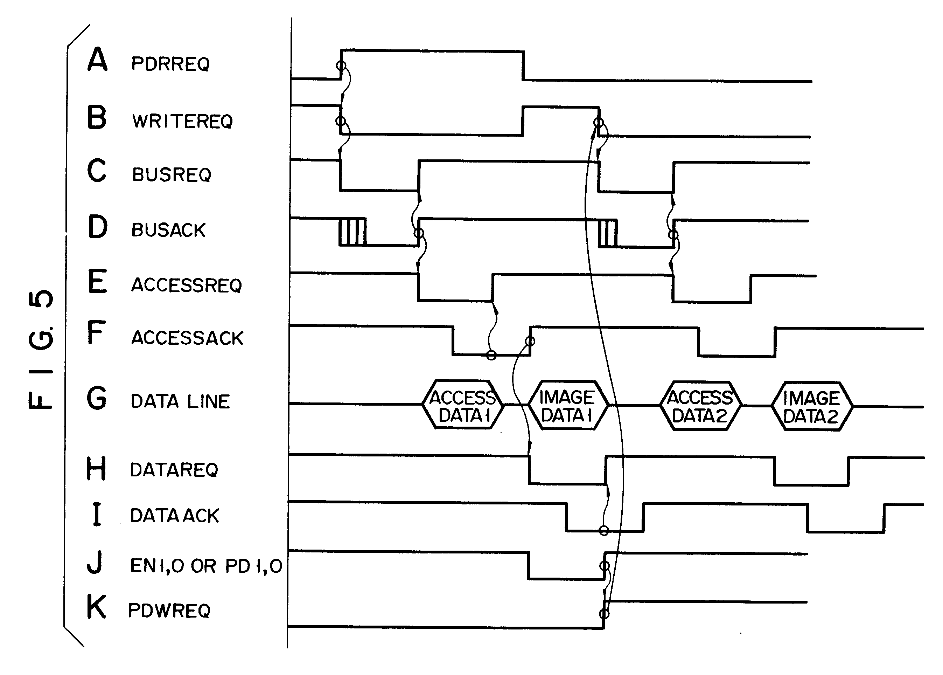

In order to set the initial conditions, coder/decoder 46 enables signal CORREQ to read out stored data (coded data from the optical disk through system bus, buffer memory 30a, and image bus 36. Note that prior to the above operation, signal PDRREQ is enabled as shown in Fig. 5A. As a result, second PLD (B) outputs a read request signal (RREQ to third programmable logic device PLD (C). At this time, by the access signal from system bus 10 first PLD (A) outputs a signal indicating that only coder/decoder 46 has been accessed to fourth and fifth programmable logic devices PLD (D) and PLD (E) as an access signal. In response to the read request signal (RREQ) from second PLD (B), third PLD (C) outputs an external bus request signal (BUS REQ) to image bus 36. As a result, a bus acknowledge signal (BUS ACK is returned from image bus 36 and received by third PLD (C). Then, third PLD (C) outputs an access request signal (ACCESS REQ) to image bus 36, while enabling a bus enable signal (BUS EN) and a data enable signal (DATA EN). As a result, code read enable signal (CREW) from fourth PLD (D) is enabled so that the data (coded data) from the optical disk is input to coder/decoder 46 through the above-described path and decoded into image data. In this case although fourth PLD (D) outputs first enable signal (ENI) to enlargement/reduction circuit 42, the enlargement/reduction operation is not performed in this stage. After the above decoding, the following series of operations are parallelly performed. More specifically, this parallel operation is performed such that the decoded data (image data) is output from coder/decoder 46 and written in page memory 30b in Fig. 1, and at the same time the data is written in display memory 32 through enlargement/reduction circuit 42, while being printed out by printer 52.

After the above decoding is finished, first PLD (A) outputs a write request signal (WREQ) to third PLD (C). At this time, first PLD (A) outputs a signal, indicating that coder/decoder 46 and enlargement/reduction circuit 42 have been accessed by the access signals from system bus 10, to fifth programmable logic device PLD (E) as an access signal. In response to a write request signal (Fig. 5B) from first PLD (A), third PLD (C) outputs a bus request signal (BUS REQ) signal (Fig. 5C) to image bus 36. When third PLD (C) receives an acknowledge signal (BUS ACK) (Fig. 5H) from image bus 36, it outputs an access request signal (ACCESS REQ) (Fig. 5E) to image bus 36, while enabling a bus enable signal (BUS EN) and a data enable signal (DATA EN). Fifth PLD (E) outputs a second enable signal (ENO) (Fig. 5J) to enlargement/reduction circuit 42. As a result, enlargement/reduction circuit 42 can perform enlargement or reduction of only the data to be written in display memory 32.

In the above operation, image bus 36 is set in the access mode by access signal REQUEST output from third PLD (C). More specifically, in this mode page memory 30b is accessed so that the image data output from coder/decoder 46 is stored in page memory 30b. When an access knowledge signal (ACCESS ACK) (Fig. 5F) is returned from image bus 36, third PLD (C) outputs a data request signal (DATA REQ) to image bus 36 as shown in Fig. 5G. In this case, in response to an access signal from first PLD (A), fifth PLD (E) outputs a write enable signal (CWEN) to coder/decoder 46. Consequently, the stored data is decoded into image data by coder/decoder 46, transferred to page memory 30b in Fig. 1 through image bus 36 for the first time, and at the same time the data is directly transferred to printer 52. At the same time, the data is transferred to enlargement/reduction circuit 42. In this case, fourth PLD (D) outputs print enable signal PREN to interface circuit 50. The stored data designated to be enlarged or reduced is transferred to display memory 32.

More specifically, the parallel operations are performed in the following order: optical disk → buffer memory 30a → image bus 36 → coder/decoder 46 → parallel processing circuit 40 → [page memory 30b, printer 52, enlargement/reduction circuit 42 → display memory 32 → display] ([ ] indicates the parallel operations). In these parallel operations, the stored data decoded by coder/decoder 46 is output to image bus 36 and directly transferred to page memory 30b, as described above, and at the same time transferred to display memory 32 through enlargement/reduction circuit 42. In addition, the data is directly transferred to printer 52 through an internal bus at a timing (not shown) and printed out. In this case, the data stored in display memory 32 is displayed on CRT display unit 18 through display controller 34. Furthermore, the image recorded and output by printer 52 has the same size as that of the image retrieved from the optical disk, thereby obtaining a so-called one-to-one print.

When enlargement or reduction printing is to be performed, parallel processing is performed in the following order:
optical disk → buffer memory 30a → image bus 36 coder/decoder 46 → parallel processing circuit 40 → [page memory 30b, enlargement/reduction circuit 42] → [display memory 32 → display, printer 52]
More specifically, the data decoded by coder/decoder 46 is output to image bus 36 in accordance with the same bus control by means of parallel processing circuit 40 as described above, directly transferred to image memory 30b, and at the same time transferred to enlargement/reduction circuit 42. The image data enlarged or reduced by enlargement/reduction circuit 42, as described above, is output to image bus 36, and stored in display memory 32, while being transferred to printer 52 through the inner bus to be printed out. At this time, since the enlargement/reduction operation has been performed, an enlarged or reduced print of the image data can be obtained. In addition, image data having the same size as that of the enlarged or reduced image data displayed on CRT display unit 18 in Fig. 1 can be printed out by printer 52 simultaneously with the display on CRT display unit 18.

In Fig. 5G, access data (1) on a data line shows a timing of accessing page memory 30b in Fig. 1, and image data (1) shows a timing of transferring the decoded data to page memory 30b. Simultaneously with the transfer operation of the data to page memory 30b, enlargement/reduction circuit 42 in Fig. 1, which is allowed to receive the decoded data, outputs signal PDWREQ shown in Fig. 5K (a write request signal from enlargement/reduction circuit 42) to first PLD (A). First PLD (A) outputs a write request signal to third PLD (C). In response to the write request signal, third PLD (C) executes the same operation as described above. In this case, however, the difference is that page memory 30b is not accessed, but display memory 32 is accessed. Therefore, the image data output from enlargement/reduction circuit 42 in Fig. 1 is transferred to display memory 32 through image bus 36 to be written.

Similarly, in Fig. 5G, access data (2) and image data (2) on the data line respectively show timings of accessing display memory 32, and of transferring the data to display memory 32.

The parallel operations are performed by repeating the same operations as described above.

Note that in Fig. 4, when sixth programmable logic device PLD (F) of parallel processing circuit 40 receives an access signal from second PLD (B), which indicates that only enlargement/reduction circuit 42 has been accessed, sixth PLD (F) outputs enlargement/reduction enable signals PDIEN and PDOEN, which are equivalent to first and second enable signals EN1 and EN2 described above, to enlargement/reduction circuit 42.

Furthermore, in Fig. 4, reference symbol SCNREQ denotes a scanner request signal from scanner 38; and SCEN, a scanner enable signal.

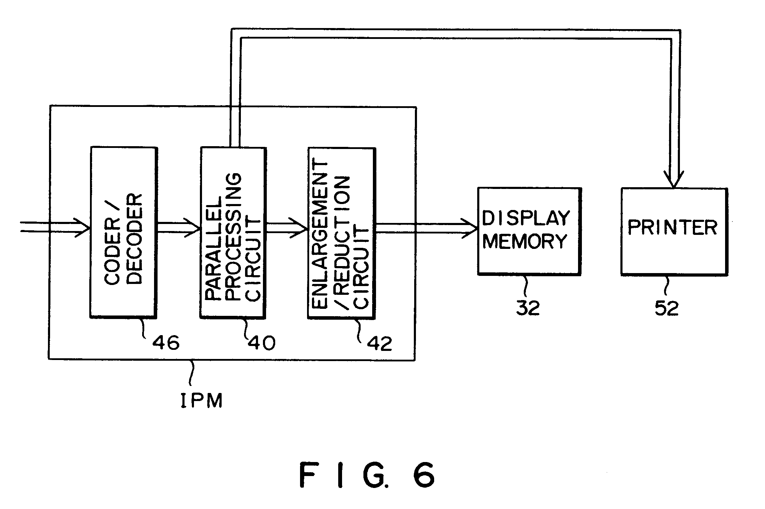

In the above embodiment, the parallel processing is performed, wherein the data decoded into image data by coder/decoder 46 is stored in page memory 30b. However, the present invention is not limited to this. For example, as shown in Fig. 6, the decoded data is not transferred to page memory 30b, but is transferred to printer 52 or display memory 32, so that the one-to-one/enlargement/reduction printing or display operation can be performed as needed. In this case, since the stored data can be displayed and printed without being stored in page memory 30b, this arrangement becomes very effective when page memory 30b is full of other image data. In addition, the display and print-out operations can be performed without using page memory 30b, and page memory 30b can be omitted, thereby reducing the cost of apparatus.

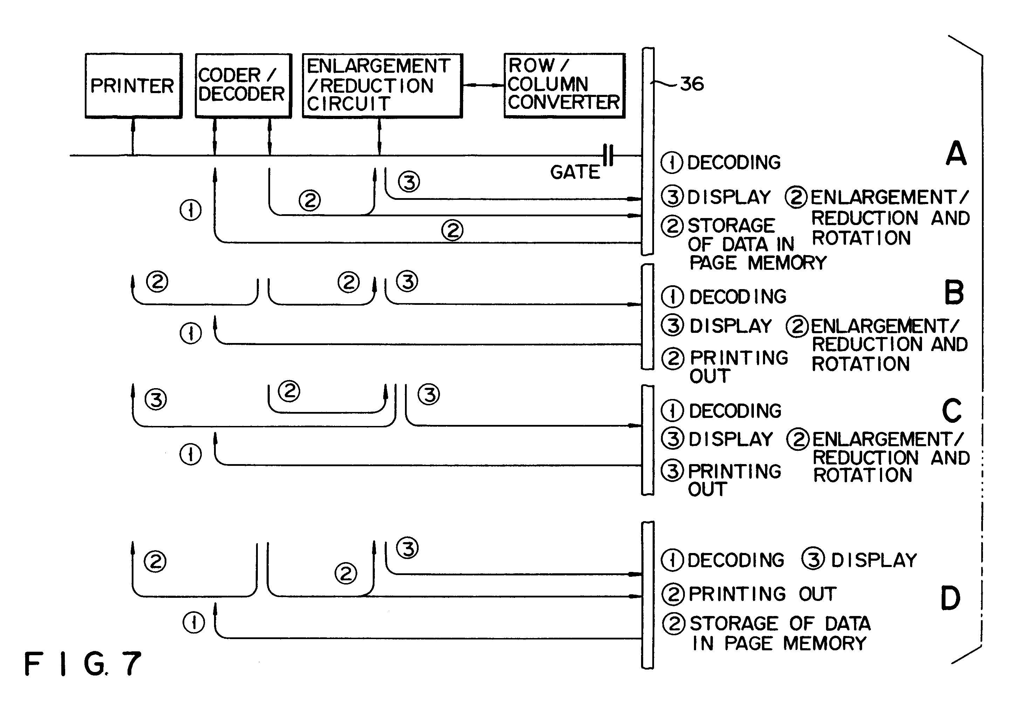

Furthermore, unlike in the above embodiment, by arranging row/column converter 44 in addition to enlargement/reduction circuit 42, image data rotated through, e.g., 90°, 180°, and 270° can be displayed on CRT display unit 18 while being printed out by printer 52. Figs. 7A to 7D are flows showing various parallel operations including a rotational display by means of row/column converter 44. In this case, the operations in Figs. 7A to 7D can be explained in a manner similar to that in Fig. 3.

In the above embodiments, designations for enlargement/reduction circuit 42 include an equal size image designation substantially inhibiting the enlargement/reduction operation. In this case, enlargement/reduction circuit 42 is transparent.

Moreover, according to the present invention, the display operation of CRT display unit 18 and the print-out operation of printer 52 can be performed simultaneously with data transmission to the facsimile unit, the personal computer, the host computer etc. or data transmission to a LAN (Local Area Network) by a cooperative operation of parallel processing circuit 40 in Fig. 1 and communication control module CCM. In this case, coded image data may be directly transmitted to the facsimile unit, the wordprocessor with a scanner, or the LAN without being routed through coder/decoder 46, as described above. On the contrary, the image data decoded by coder/decoder 46 may be transmitted to the facsimile unit, the personal computer, the host computer, or the LAN.

As has been described above, according to the present invention, temporary storage of stored data retrieved from first storage means in second storage means and the display operation of the display means can be parallelly performed. In addition, the displays operation and the recording/output operation of the recording means can be parallelly performed. Therefore, the display and/or the recording/output operation of the retrieved stored data, and the display operation and/or recording/output operation of retrieved data can be performed simultaneously with the temporary storage operation of the second storage means, thereby increasing efficiency in retrieval processing.

## Claims

1. A data retrieval apparatus comprising:
- storage memory means (22) for storing data to be processed, said data including coded data of an image;
- means (26) for retrieving the data stored in said storage memory means (22);
- means (46) for decoding the coded data retrieved from said storage memory means (22) into image data; and
- bus means (10, 36),
characterized in that
- page memory means 30b store the image data decoded by said decoding means (46);
- enlarging/reducing means (42) enlarge/reduce the image data decoded by said decoding means (46) to a predetermined display size;
- display memory means (32) store enlarged/reduced image data from said enlarging/reducing means (42);
- display means (18) display the enlarged/reduced image data stored in said display memory means (32);
- said bus means (10, 36) connect at least said decoding means (46), said page memory means 30b, and said display memory means (32) to each other; and
- parallel processing means (40) cause said page memory means 30b to store decoded data for the purpose of further processing, said storing being performed in parallel with processing of said decoded data by said enlarging/reducing means (42) thereby performing bus control of said bus means (10, 36), and enabling parallel processing of said decoded image data.

2. An apparatus according to claim 1, characterized by further comprising means (52) for recording the image data decoded by said decoding means (46), wherein said parallel processing means (40) causes said page memory means 30b, to store decoded data for the purpose of further processing, said storing being performed in parallel with processing of said decoded data by said enlarging/reducing means (42) and said recording means (52), thereby performing bus control of said bus means (10, 36), and enabling parallel processing of said decoded image data.

3. An apparatus according to claim 2, characterized in that said recording means (52) comprise a printer.

4. An apparatus according to any one of claims 1 to 3, characterized in that said parallel processing means (12, 40) comprises programmable logic devices.

5. An apparatus according to any one of claims 1 to 4, characterized in that said storage memory means (22) comprises an optical disk.

6. An apparatus according to any one of claims 1 to 5, characterized in that said displaying means (18) comprises a CRT display.

7. An apparatus according to any one of claims 1 to 6, characterized by further comprising means (54, 56) for communicating at least one of the coded data retrieved by said retrieving means (26) and the image data decoded by said decoding means (46) to an external unit, when said enlarging/reducing means (42) performs at least one enlarging/reducing operation.

8. An apparatus according to any one of claims 1 to 6, characterized by further comprising means (54, 56) for communicating predetermined data between at least one of a facsimile unit, a personal computer, a host computer, and a local area network.

## Patentansprüche

1. Datenabrufvorrichtung, welche folgendes umfaßt:
- eine Ablagespeichereinrichtung (22) zum Speichern zu verarbeitender Daten, wobei diese Daten codierte Daten eines Bildes enthalten;
- eine Einrichtung (26) zum Abrufen der in der Ablagespeichereinrichtung (22) gespeicherten Daten;
- eine Einrichtung (46) zum Decodieren der aus der Ablagespeichereinrichtung (22) abgerufenen codierten Daten zu Bilddaten; und
- eine Buseinrichtung (10, 36),
dadurch gekennzeichnet, daß
- eine Seitenspeichereinrichtung (30b) die von der Decodiereinrichtung (46) decodierten Bilddaten speichert;
- eine Vergrößerungs-/Verkleinerungseinrichtung (42) die von der Decodiereinrichtung (46) decodierten Bilddaten auf eine vorgegebene Anzeigengröße vergrößert/verkleinert;
- eine Anzeigespeichereinrichtung (32) die vergrößerten/verkleinerten Bilddaten von der Vergrößerungs-/Verkleinerungseinrichtung (42) speichert;
- eine Anzeigeeinrichtung (18) die in der Anzeigespeichereinrichtung (32) gespeicherten vergrößerten/verkleinerten Bilddaten anzeigt;
- die Buseinrichtung (10, 36) mindestens die Decodiereinrichtung (46), die Seitenspeichereinrichtung (30b) und die Anzeigespeichereinrichtung (32) untereinander verbindet und
- eine Parallelverarbeitungseinrichtung (40) die Seitenspeichereinrichtung (30b) veranlaßt, decodierte Daten zur Weiterverarbeitung zu speichern, wobei diese Speicherung parallel zur Verarbeitung der decodierten Daten durch die Vergrößerungs-/Verkleinerungseinrichtung (42) erfolgt, wodurch eine Bussteuerung der Buseinrichtung (10, 36) ausgeführt und eine parallele Verarbeitung der decodierten Bilddaten ermöglicht wird.

2. Vorrichtung gemäß Anspruch 1, dadurch gekennzeichnet, daß sie des weiteren eine Einrichtung (52) zum Aufzeichnen der von der Decodiereinrichtung (46) decodierten Bilddaten umfaßt, wobei die Parallelverarbeitungseinrichtung (40) die Seitenspeichereinrichtung (30b) veranlaßt, decodierte Daten zur Weiterverarbeitung zu speichern, und diese Speicherung parallel zur Verarbeitung der decodierten Daten durch die Vergrößerungs-/Verkleinerungseinrichtung (42) erfolgt, wodurch eine Bussteuerung der Buseinrichtung (10, 36) ausgeführt und eine parallele Verarbeitung der decodierten Bilddaten ermöglicht wird.

3. Vorrichtung gemäß Abspruch 2, dadurch gekennzeichnet, daß die Aufzeichnungseinrichtung (52) einen Drucker umfaßt.

4. Vorrichtung gemäß einem der Ansprüche 1 bis 3, dadurch gekennzeichnet, daß die Parallelverarbeitungseinrichtung (12, 40) programmierbare logische Geräte umfaßt.

5. Vorrichtung gemäß einem der Ansprüche 1 bis 4, dadurch gekennzeichnet, daß die Ablagespeichereinrichtung (22) eine optische Platte umfaßt.

6. Vorrichtung gemäß einem der Ansprüche 1 bis 5, dadurch gekennzeichnet, die Anzeigeeinrichtung (18) eine CRT-Anzeige umfaßt.

7. Vorrichtung gemäß einem der Ansprüche 1 bis 6, gekennzeichnet durch des weiteren eine Einrichtung (54, 56), welche mindestens ein Datum der decodierten von der Abrufeinrichtung (26) abgerufenen und von der Decodiereinrichtung (46) decodierten Bilddaten an eine externe Einheit überträgt, wenn die Vergrößerungs-/Verkleinerungseinrichtung (42) mindestens eine Vergrößerungs-/Verkleinerungsoperation ausführt.

8. Vorrichtung gemäß einem der Ansprüche 1 bis 6, gekennzeichnet durch des weiteren eine Einrichtung (54, 56) zur Übertragung vorgegebener Daten zwischen mindestens entweder einer Faksimileeinheit, einem Personal Computer oder einem Hostcomputer und einem lokalen Netz.

## Revendications

1. Appareil de recherche de données comprenant :
un moyen de mémoire de stockage (22) pour stocker des données qui doivent être traitées, lesdites données incluant des données codées d'une image ;
un moyen (26) pour rechercher les données stockées dans ledit moyen de mémoire de stockage (22) ;
un moyen (46) pour décoder les données codées recherchées dans ledit moyen de mémoire de stockage (22) en données d'image ; et
un moyen de bus (10, 36),
caractérisé en ce que :
un moyen de mémoire de page (306) stocke les données d'image décodées par ledit moyen de décodage (46) ;
un moyen d'agrandissement/réduction (42) agrandit/réduit les données d'image décodées par ledit moyen de décodage (46) selon une dimension d'affichage prédéterminée ;
un moyen de mémoire d'affichage (32) stocke des données d'image agrandies/réduites provenant dudit moyen d'agrandissement/réduction (42) ;
un moyen d'affichage (18) affiche les données d'image agrandies/réduites stockées dans ledit moyen de mémoire d'affichage (32) ;
ledit moyen de bus (10, 36) connecte au moins ledit moyen de décodage (46), ledit moyen de mémoire de page (306) et ledit moyen de mémoire d'affichage (32) les uns aux autres ; et
un moyen de traitement parallèle (40) force ledit moyen de mémoire de page (306) à stocker des données décodées dans le but d'un traitement ultérieur, ledit stockage étant réalisé en parallèle avec le traitement desdites données décodées par ledit moyen d'agrandissement/réduction (42) en effectuant ainsi une commande de bus dudit moyen de bus (10, 36) et en validant un traitement parallèle desdites données d'image décodées.

2. Appareil selon la revendication 1, caractérisé en ce qu'il comprend en outre un moyen (52) pour enregistrer les données d'image décodées dans ledit moyen de décodage (46), dans lequel ledit moyen de traitement parallèle (40) force ledit moyen de mémoire de page (306) à stocker des données décodées dans le but d'un traitement ultérieur, ledit stockage étant réalisé en parallèle avec le traitement desdites données décodées par ledit moyen d'agrandissement/réduction (42) et par ledit moyen d'enregistrement (52) en effectuant ainsi une commande de bus dudit moyen de bus (10, 36) et en validant un traitement parallèle desdites données d'image décodées.

3. Appareil selon la revendication 2, caractérisé en ce que ledit moyen d'enregistrement (52) comprend une imprimante.

4. Appareil selon l'une quelconque des revendications 1 à 3, caractérisé en ce que ledit moyen de traitement parallèle (12, 40) comprend des dispositifs de logique programmable.

5. Appareil selon l'une quelconque des revendications 1 à 4, caractérisé en ce que ledit moyen de mémoire de stockage (22) comprend un disque optique.

6. Appareil selon l'une quelconque des revendications 1 à 5, caractérisé en ce que ledit moyen d'affichage (18) comprend un affichage à tube à rayons cathodiques (CRT).

7. Appareil selon l'une quelconque des revendications 1 à 6, caractérisé en ce qu'il comprend en outre un moyen (54, 56) pour communiquer au moins un jeu de données pris parmi les données codées recherchées par ledit moyen de recherche (26) et les données d'image décodées par ledit moyen de décodage (46) à une unité externe lorsque ledit moyen d'agrandissement/réduction (42) réalise au moins une opération d'agrandissement/réduction.

8. Appareil selon l'une quelconque des revendications 1 à 6, caractérisé en ce qu'il comprend en outre un moyen (54, 56) pour communiquer des données prédéterminées entre au moins une unité de facsimilé, un ordinateur personnel, un ordinateur hôte et un réseau local d'entreprise (RLE).
